# FASCICULE DE BREVET EUROPEEN

(11) **EP 2 535 271 B1**
(45) Date de publication et mention de la délivrance du brevet: **10.08.2016**
(21) Numéro de dépôt: 12305656.6
(22) Date de dépôt: 08.06.2012
(51) Int. Cl.: B64D 15/12, B64D 33/02

(54) **ENTRÉE D'AIR D'UNE NACELLE D'AÉRONEF INCORPORANT UNE LÈVRE RENFORCÉE AVEC UN SYSTÈME DE DÉGIVRAGE PAR EFFET JOULE**
LUFTEINLASSÖFFNUNG EINER LUFTFAHRZEUGGONDEL MIT VERSTÄRKTER LIPPE UND EINEM ENTEISUNGSSYSTEM DURCH JOULEEFFEKT
AIR INTAKE OF AN AIRCRAFT NACELLE INCLUDING A REINFORCED LIP WITH A JOULE EFFECT DE-ICING SYSTEM

(30) Priorité: 17.06.2011 FR 1155332
(43) Date de publication de la demande: 19.12.2012
(73) Titulaire: Airbus Opérations SAS, 31060 Toulouse (FR)
(72) Inventeur: Porte, Alain, 31770 Colomiers (FR); Chelin, Frédéric, 32430 Encausse (FR)
(74) Mandataire: Fantin, Laurent

(56) Documents cités:
- EP-A1- 0 898 063
- EP-A2- 1 845 018
- WO-A2-2006/136748
- FR-A1- 2 908 737
- FR-A1- 2 930 234

## Description

La présente invention se rapporte à une entrée d'air d'une nacelle d'aéronef incorporant une lèvre renforcée avec un système de dégivrage par effet joule. Un ensemble propulsif d'aéronef comprend une nacelle dans laquelle est disposée de manière sensiblement concentrique une motorisation.

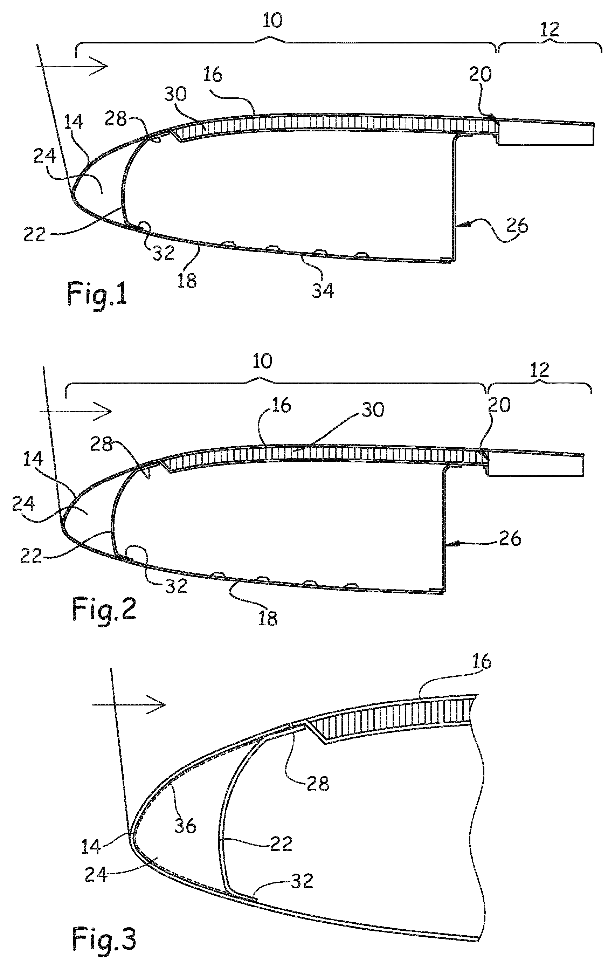

Comme illustré sur la figure 1, la nacelle comprend à l'avant une entrée d'air 10 permettant de canaliser un flux d'air en direction de la motorisation 12. Elle comprend une lèvre 14 dont la surface en contact avec les flux aérodynamiques est prolongée à l'intérieur de la nacelle par une paroi intérieure 16 délimitant un conduit et à l'extérieur de la nacelle par une paroi extérieure 18.

L'entrée d'air 10 est reliée à la motorisation 12 au niveau d'une surface de jonction 20 par tous moyens appropriés. La surface de jonction 20 est sensiblement plane et perpendiculaire à l'axe longitudinal de la nacelle.

Sur le plan structurel, l'entrée d'air 10 comprend un premier cadre dit cadre avant 22 reliant la paroi intérieure 16 et la paroi extérieure 18 et délimitant avec la lèvre 14 un conduit annulaire 24 ainsi qu'un second cadre dit cadre arrière 26 reliant la paroi intérieure 16 et la paroi extérieure 18 à proximité de la surface de jonction 20 de la motorisation.

Concernant le cadre arrière 26, ce dernier assure la reprise des efforts de flexion, de rotation ou autre qui s'appliquent sur l'entrée d'air tels que par exemple, le poids de l'entrée d'air, les efforts induits par les écoulements aérodynamiques. Ce cadre arrière 26 est disposé dans un plan sensiblement perpendiculaire à la direction longitudinale de la nacelle.

Un cadre arrière est notamment décrit dans le document FR-2.904.604. Concernant le cadre avant 22, ce dernier comprend au niveau de la paroi intérieure un bord 28 recourbé vers l'arrière de la nacelle contre lequel sont plaqués un bord d'un panneau formant la lèvre 14 et un bord d'un autre panneau 30 formant la paroi intérieure 16, lesdits bords étant mis bout à bout. Avantageusement, le panneau 30 assure le traitement acoustique et comprend une structure alvéolaire lui conférant une certaine rigidité.

En complément, le cadre avant 22 comprend au niveau de la paroi extérieure 18 un bord 32 recourbé vers l'arrière de la nacelle contre lequel est plaquée au moins une partie du panneau formant la lèvre. Selon une première variante illustrée sur la figure 1, la paroi extérieure 18 est formée par un panneau 34 indépendant du panneau formant la lèvre 14. Dans ce cas, les bords adjacents du panneau 34 et du panneau formant la lèvre 14 sont mis bout à bout et plaqués contre le bord recourbé 32. Le panneau formant la lèvre 14 est généralement métallique pour être compatible avec un système pour traiter le givre ou la glace utilisant de l'air chaud prévu au niveau de l'entrée d'air et le panneau 34 en matériau composite pour réduire la masse embarquée.

Selon une autre variante illustrée sur la figure 2, le panneau formant la lèvre 14 peut se prolonger au-delà du cadre avant 22 et s'étendre jusqu'au cadre arrière 26 de manière à former également la paroi extérieure 18. Par rapport à la variante illustrée sur la figure 1, cette solution permet d'améliorer les caractéristiques aérodynamiques en supprimant la zone de jonction entre les panneaux mis bout en bout qui forme une marche susceptible de générer des perturbations au niveau des écoulements d'air. Lorsque le panneau est métallique et que l'entrée d'air comprend un système de dégivrage utilisant de l'air chaud par exemple, cette solution permet d'augmenter la surface traitée sur le plan du dégivrage grâce à la conductivité thermique du panneau. Toutefois, cette solution a pour inconvénient d'augmenter la masse embarquée.

Même si le panneau formant la lèvre 14 se prolonge au-delà du cadre avant 22 et s'étend jusqu'au cadre arrière 26 de manière à former également la paroi extérieure 18, la présence d'un cadre avant 22 est indispensable car ce dernier permet d'une part de délimiter un conduit annulaire pour canaliser de l'air chaud utilisé pour le dégivrage, et d'autre part, d'assurer la résistance mécanique en formant une deuxième barrière après la lèvre en cas de choc d'oiseau.

En matière de dégivrage, il existe une autre solution n'utilisant pas de l'air chaud, consistant à rapporter au niveau de la peau formant la lèvre des résistances électriques 36. Ces résistances électriques se présentent sous la forme d'éléments en matériau conducteur qui sont disposés selon une direction longitudinale et reliés entre eux selon un montage en série ou en parallèle sur le plan électrique.

Selon un mode de réalisation, les résistances électriques sont plaquées contre la surface intérieure du panneau formant la lèvre 14 dont l'autre surface est en contact avec les flux aérodynamiques.

Même si ce type de dégivrage n'utilise pas de l'air chaud, le cadre avant 22 est toutefois nécessaire pour assurer la résistance mécanique.

Selon un autre aspect, la lèvre 14 subit de nombreux petits chocs qui peuvent générer des phénomènes de délamination entre le panneau formant la lèvre 14 et les résistances électriques 36, notamment dans la zone de l'impact. Les phénomènes de délamination conduisent à l'apparition d'une lame d'air entre les résistances électriques 36 et le panneau formant la lèvre 14 qui perturbe le dégivrage. En effet, cette lame d'air engendre une surchauffe de la ou des résistance(s) électrique(s) 36 au niveau de la zone de délaminage qui peut aller jusqu'à la rupture de la ou des résistance(s) électrique(s) 36 au niveau de la zone de surchauffe ce qui conduit à ne plus avoir la fonction de dégivrage sur la zone recouverte par ladite ou lesdites résistance(s) électrique(s) 36. Par ailleurs, la lame d'air forme une couche isolante si bien que le système de dégivrage n'est plus dimensionné de manière adéquate dans la zone de délaminage et par conséquent le dégivrage est insuffisant dans cette zone.

Aussi, la présente invention vise à pallier les inconvénients de l'art antérieur en proposant une entrée d'air d'une nacelle d'aéronef renforcée comprenant un dégivrage par effet joule. Selon un autre objectif, l'invention propose une entrée d'air résistante sans cadre avant.

A cet effet, l'invention a pour objet une entrée d'air d'une nacelle d'aéronef comprenant d'une part une lèvre définie par une paroi dont la surface en contact avec les flux aérodynamiques est prolongée à l'intérieur de la nacelle par une paroi intérieure délimitant un conduit débouchant au niveau d'une motorisation et à l'extérieur de la nacelle par une paroi extérieure, et d'autre part, un système de dégivrage par effet joule de type surfacique, caractérisée en ce qu'elle comprend au moins une première structure alvéolaire en un matériau conducteur de la chaleur plaquée contre la surface intérieure de la paroi et intercalée entre ladite paroi et le système de dégivrage et au moins une seconde structure alvéolaire en matériau composite adjacente à la première structure.

D'autres caractéristiques et avantages ressortiront de la description qui va suivre de l'invention, description donnée à titre d'exemple uniquement, en regard des dessins annexés sur lesquels :
- La figure 1 est une coupe d'une entrée d'air selon une première variante de l'art antérieur,
- La figure 2 est une coupe d'une entrée d'air selon une deuxième variante de l'art antérieur,
- La figure 3 est une coupe d'une entrée d'air selon une troisième variante de l'art antérieur intégrant un système de dégivrage de type électrique,
- La figure 4 est une coupe d'une partie d'une entrée d'air selon une première variante de l'invention intégrant un système de dégivrage de type électrique amélioré,
- La figure 5 est une coupe d'une partie d'une entrée d'air selon une autre variante de l'invention intégrant un système de dégivrage de type électrique amélioré,
- La figure 6 est une coupe d'une partie d'une entrée d'air selon une autre variante de l'invention intégrant un système de dégivrage de type électrique amélioré, et
- La figure 7 est une coupe d'une entrée d'air selon l'invention.

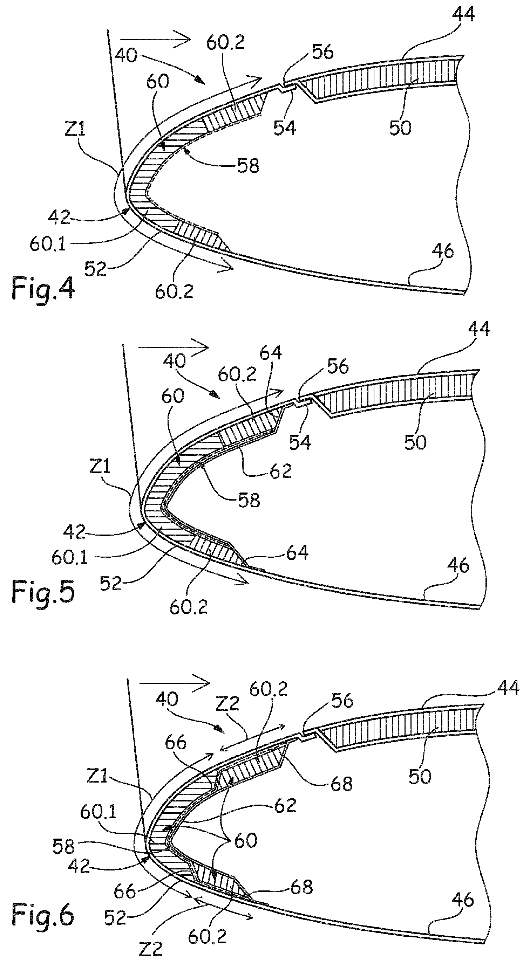

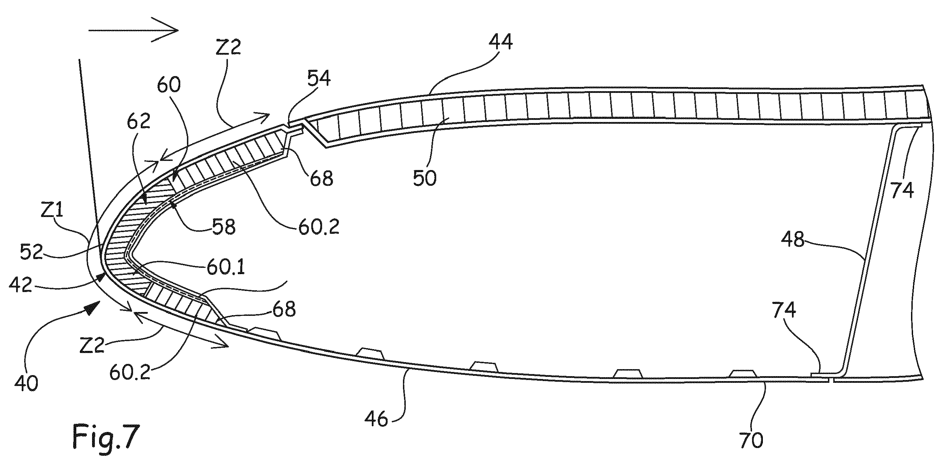

Sur les figures 4 et 7, on a représenté une nacelle avec à l'avant une entrée d'air 40 permettant de canaliser un flux d'air en direction d'une motorisation, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation. Pour la suite de la description, l'axe longitudinal de la nacelle correspond à l'axe de rotation de la motorisation. L'avant de la nacelle correspond à l'endroit où le flux pénètre à l'intérieur de la nacelle et l'arrière de la nacelle correspond à l'endroit où le flux sort de la nacelle.

L'entrée d'air 40 comprend une lèvre 42 dont la surface en contact avec les flux aérodynamiques est prolongée à l'intérieur de la nacelle par une paroi intérieure 44 délimitant un conduit et à l'extérieur de la nacelle par une paroi extérieure 46.

L'entrée d'air 40 est reliée à la motorisation par tous moyens appropriés.

Sur le plan structurel, l'entrée d'air 40 comprend un cadre dit cadre arrière 48 visible uniquement sur la figure 7) reliant la paroi intérieure 44 et la paroi extérieure 46 à proximité de la zone de jonction avec la motorisation. Avantageusement, la paroi intérieure comprend un panneau 50 assurant un traitement acoustique.

Le panneau 50, la motorisation, la zone de jonction de l'entrée d'air et de la motorisation ne sont pas plus décrits car ils sont connus de l'homme du métier et ne sont pas les éléments essentiels de l'invention.

Selon un mode de réalisation, la lèvre 42 comprend une paroi 52 qui s'étend sur toute la circonférence, avec un profil en C dans un plan de coupe contenant l'axe longitudinal de la nacelle. Une première extrémité 54 de la paroi 52 est reliée par tous moyens appropriés au conduit 44. De préférence, la paroi 52 comprend un décrochement 56 au niveau de l'extrémité 54 de manière à recevoir l'extrémité de la paroi intérieure 44 afin que la surface extérieure de la paroi 52 soit dans le prolongement de la surface extérieure de la paroi 44. Toutefois, d'autres agencements peuvent être envisagés pour assurer la liaison entre les parois 44 et 52.

La paroi 52 peut comprendre un seul panneau mis en forme ou plusieurs panneaux mis en forme et assemblés de manière à former une paroi avec une section en C s'étendant sur toute la périphérie de l'entrée d'air.

L'invention est maintenant décrite pour une section de l'entrée d'air contenant l'axe de la nacelle. Cette section est sensiblement identique sur toute la circonférence de l'entrée d'air.

Selon l'invention, l'entrée d'air d'une nacelle aéronef comprend un système de dégivrage par effet joule 58 et une structure alvéolaire 60 en un matériau conducteur de la chaleur plaquée contre la surface intérieure de la paroi 52 et intercalée entre ladite paroi 52 et le système de dégivrage 58.

Le système de dégivrage par effet joule 58 comprend au moins un élément conducteur électrique. Selon un mode de réalisation, le système de dégivrage par effet joule 58 comprend un seul élément conducteur en forme de serpentin s'étendant sur toute la zone à traiter ou plusieurs éléments conducteurs linéaires reliés selon un montage en série ou en parallèle. En variante, le système de dégivrage par effet joule peut comprendre au moins une nappe conductrice. Le système de dégivrage par effet joule n'est pas plus détaillé car il est connu de l'homme du métier et peut prendre différentes configurations. A titre d'exemple, il est notamment décrit dans le document FR-2.908.737.

Dans tous les cas, le système de dégivrage par effet joule est de type surfacique et comprend au moins un élément souple.

La structure alvéolaire peut se présenter sous la forme d'un nid d'abeilles.

Le fait de prévoir une structure alvéolaire 60 plaquée contre la paroi 52 permet de limiter les risques de délaminage en cas de petits chocs et l'apparition de lame d'air entre la paroi 52 et la structure alvéolaire 60.

Même si, en raison d'un choc plus important, la paroi 52 se détache par délaminage au niveau de la zone d'impact de la structure alvéolaire 60, la structure alvéolaire 60 étant rigide, les risques de délaminage entre la structure alvéolaire 60 et le système de dégivrage par effet joule 58 sont nuls si bien que ce dernier ne risque pas d'être endommagé en raison d'une surchauffe.

Selon un autre aspect, la présence de la structure alvéolaire 60 tend à augmenter la rigidité de la lèvre si bien qu'il est possible de supprimer le cadre avant.

Selon un autre point, il est possible de compenser l'augmentation de la masse embarquée en raison de la présence d'une structure alvéolaire 60 en réduisant l'épaisseur de la paroi 52.

Selon un mode de réalisation, la paroi 52 et la structure alvéolaire 60 sont métalliques et réalisées avec le même matériau afin de limiter les risques de corrosion galvanique. Avantageusement, la paroi 52 et la structure alvéolaire 60 sont en alliage d'aluminium.

Pour former une barrière en cas de choc d'oiseau, l'entrée d'air comprend un absorbeur de choc sous forme d'une peau 62 collée contre le système de dégivrage par effet joule 58, comme illustré sur les figures 5 à 7. Selon un mode de réalisation, cette peau 62 se présente sous forme d'une couche à base de fibres commercialisées sous la marque Kevlar®. Cet agencement permet d'augmenter la rigidité de la lèvre 42. Avantageusement, la peau 62 arrière s'étend au-delà de la zone recouverte par la structure alvéolaire 60 de manière à être reliée à la paroi 52 de part et d'autre de la structure alvéolaire 60. Cette solution permet d'obtenir une structure sandwich qui contribue à améliorer les caractéristiques mécaniques de la lèvre 42.

De préférence, les bords libres 64 de la structure alvéolaire 60 ont une forme en biseau de manière à assurer un meilleur passage des efforts entre la peau arrière 62 et la paroi 52.

Selon les variantes, la structure alvéolaire 60 peut s'étendre sur toute la hauteur de l'entrée d'air, ou seulement sur une partie de cette hauteur.

Par hauteur de l'entrée d'air, on entend la distance séparant la paroi intérieure 44 et la paroi extérieure 46 au niveau de l'emplacement occupé par un cadre avant selon l'art antérieur.

La structure alvéolaire s'étend sur une zone Z1 correspondant à au moins 2/3 de la hauteur de l'entrée d'air. Cette zone correspond à la zone où les chocs ont un angle d'incidence faible.

Selon une variante, la structure alvéolaire s'étend sur une zone Z1 correspondant à approximativement 2/3 de la hauteur de l'entrée d'air, comme illustré sur les figures 6 et 7.

Selon d'autres variantes, la structure alvéolaire 60 peut s'étendre sur une zone Z1 supérieure à 2/3 de la hauteur de l'entrée d'air, comme illustré sur les figures 4 et 5.

Selon les cas, la zone Z1 peut être centrée ou non par rapport au point le plus en avant de la nacelle.

Dans cette zone Z1, la structure alvéolaire est dimensionnée essentiellement pour la résistance mécanique, notamment pour sa résistance à la compression. Ainsi, les cellules de la structure alvéolaire ont une section de l'ordre de 2 à 3 mm.

Selon une autre caractéristique de l'invention, l'entrée d'air peut comprendre plusieurs structures alvéolaires 60.1 et 60.2 avec des caractéristiques différentes juxtaposées les unes aux autres.

Dans la zone Z1 correspondant à approximativement 2/3 de la hauteur de l'entrée d'air, la structure alvéolaire 60.1 est dimensionnée essentiellement pour la résistance mécanique, notamment pour sa résistance à la compression alors que dans au moins une zone Z2 adjacente à la zone Z1, la ou les structure(s) alvéolaire(s) 60.2 est (sont) dimensionnée(s) essentiellement pour les caractéristiques acoustiques. De préférence, l'entrée d'air comprend deux structures alvéolaires 60.2 disposées de part et d'autre de la structure alvéolaire 60.1.

Cette solution permet d'optimiser les caractéristiques des structures alvéolaires en fonction de leurs positions et ainsi d'optimiser la masse embarquée.

A titre illustratif, dans la zone Z1, les cellules de la structure alvéolaire 60.1 ont une section de l'ordre de 2 à 3 mm alors que dans la zone Z2, les cellules des structures alvéolaires 60.2 ont une section de l'ordre de 10 à 12 mm.

Selon une variante illustrée sur la figure 6, la structure alvéolaire 60.1 est en un matériau conducteur, notamment à base d'alliage d'aluminium, et la ou les structure(s) alvéolaire(s) 60.2 en matériau composite, non conducteur, notamment en nid d'abeilles commercialisé sous la marque Nomex®.

Selon cette variante, dans la zone Z1, le système de dégivrage par effet joule 58 est plaqué contre la surface de la structure alvéolaire 60.1 opposée à la paroi 52 et dans les zones Z2, il est plaqué contre la surface intérieure de la paroi 52, intercalé entre ladite paroi et les structures alvéolaires 60.2. Avantageusement, les bords 66 de la structure alvéolaire 60.1 et des structures alvéolaires 60.2 adjacents ont des formes en biseau complémentaires afin que le système de dégivrage par effet joule 58 ne soit pas plaqué contre une arête délimitant deux surfaces à 90° pour limiter les risques d'endommagement dudit système de dégivrage 58. En complément, les bords libres 68 des structures alvéolaires 60.2 ont une forme en biseau de manière à assurer un passage des efforts entre la peau arrière 62 et la paroi 52.

Comme indiqué précédemment, la conception de la lèvre 14 selon l'invention permet de supprimer le cadre avant.

Selon une autre caractéristique de l'invention, la seconde extrémité 70 de la paroi 52 formant la lèvre 42 s'étend jusqu'au cadre arrière 48. Pour assurer une meilleure reprise des efforts, le cadre arrière est incliné et son bord extérieur 72 est décalé vers l'avant de la nacelle par rapport à son bord intérieur 74.

En dehors des zones recouvertes par la ou les structure(s) alvéolaire(s) 60, 60.1, 60.2, la paroi 52 peut comprendre des renforts 76 rapportés au niveau de la surface intérieure de ladite paroi 52. De préférence, ces renforts 76 sont disposés dans des plans sensiblement perpendiculaires à l'axe longitudinal.

## Revendications

1. Entrée d'air d'une nacelle d'aéronef comprenant d'une part une lèvre (42) définie par une paroi (52) dont la surface en contact avec les flux aérodynamiques est prolongée à l'intérieur de la nacelle par une paroi intérieure (44) délimitant un conduit débouchant au niveau d'une motorisation et à l'extérieur de la nacelle par une paroi extérieure (46), et d'autre part, un système de dégivrage par effet joule (58) de type surfacique, l'entrée d'air comprenant au moins une première structure alvéolaire (60.1) en un matériau conducteur de la chaleur plaquée contre la surface intérieure de la paroi (52) et intercalée entre ladite paroi (52) et le système de dégivrage (58), **caractérisée en ce qu'**elle comprend au moins une seconde structure alvéolaire (60.2) en matériau composite adjacente à la première structure (60.1) et disposée à côté de ladite première structure (60.1) le long de la paroi (52).

2. Entrée d'air d'une nacelle d'aéronef selon la revendication 1, **caractérisée en ce que** la seconde structure alvéolaire ( 60.2) est plaquée contre la surface intérieure de la paroi (52), le système de dégivrage (58) étant intercalé entre la seconde structure alvéolaire (60.2) et ladite paroi (52).

3. Entrée d'air d'une nacelle d'aéronef selon la revendication 1 ou 2, **caractérisée en ce qu'**elle comprend un absorbeur de choc sous forme d'une peau (62) collée contre le système de dégivrage par effet joule (58).

4. Entrée d'air d'une nacelle d'aéronef selon la revendication 3, **caractérisée en ce que** la peau (62) se présente sous la forme d'une couche à base de fibres.

5. Entrée d'air d'une nacelle d'aéronef selon l'une quelconque des revendications précédentes, **caractérisée en ce que** la première structure alvéolaire (60.1) en matériau conducteur de la chaleur s'étend sur une zone Z1 correspondant à au moins 2/3 de la distance séparant la paroi intérieure (44) et la paroi extérieure (46) de l'entrée d'air.

6. Entrée d'air d'une nacelle d'aéronef selon l'une quelconque des revendications précédentes, **caractérisée en ce qu'**elle comprend une structure alvéolaire d'un premier type (60.1) dans une zone Z1 correspondant à approximativement 2/3 de la distance séparant la paroi intérieure (44) et la paroi extérieure (46) de l'entrée d'air dimensionnée essentiellement pour la résistance mécanique et au moins une structure alvéolaire d'un second type (60.2) dans une au moins une zone Z2 adjacente à la zone Z1 dimensionnée essentiellement pour les caractéristiques acoustiques.

7. Entrée d'air d'une nacelle d'aéronef selon la revendication 6, **caractérisée en ce que** la structure alvéolaire du premier type (60.1) dans la zone Z1 est en un matériau conducteur et la ou les structure(s) alvéolaire(s) du second type (60.2) dans la ou les zone(s) Z2 en matériau composite et **en ce que** le système de dégivrage par effet joule (58) est plaqué contre la surface de la structure alvéolaire du premier type (60.1) opposée à la paroi (52) dans la zone Z1 et plaqué contre la surface intérieure de la paroi 52, intercalé entre ladite paroi et la ou les structure(s) alvéolaire(s) du second type (60.2) dans la ou les zone(s) Z2.

8. Entrée d'air d'une nacelle d'aéronef selon la revendication 7, **caractérisée en ce que** les bords (66) de la structure alvéolaire du premier type (60.1) et des structures alvéolaires du second type (60.2) adjacents ont des formes en biseau complémentaires.

9. Entrée d'air d'une nacelle d'aéronef selon l'une quelconque des revendications précédentes, **caractérisée en ce que** les bords libres de la ou des structure(s) alvéolaire(s) ont une forme en biseau.

10. Nacelle d'aéronef incorporant une entrée d'air selon l'une quelconque des revendications, **caractérisée en ce qu'**elle comprend un cadre arrière (48) au niveau du plan de jonction entre ladite entrée d'air et une motorisation reliée à la paroi (52) délimitant la lèvre (42).

11. Nacelle d'aéronef selon la revendication 10, **caractérisée en ce que** le cadre arrière est incliné et son bord extérieur (72) est décalé vers l'avant de la nacelle par rapport à son bord intérieur (74).

## Patentansprüche

1. Lufteinlass einer Gondel eines Luftfahrzeugs, einerseits mit einem Wulst (42), der von einer Wand (52) gebildet ist, deren in Kontakt mit der aerodynamischen Strömung stehenden Oberfläche innerhalb der Gondel durch eine Innenwand (44) verlängert ist, die einen Kanal begrenzt, der in den Bereich einer Motorisierung mündet, und außerhalb der Gondel durch eine Außenwand (46) verlängert ist, und andererseits mit einem System (58) für die Enteisung mittels Joule-Effekt vom Oberflächentyp, wobei der Lufteinlass wenigstens eine erste Kammerstruktur (60.1) aus einem wärmeleitenden Material aufweist, die gegen die Innenseite der Wand (52) angesetzt ist und zwischen der Wand (52) und dem System (58) für die Enteisung angeordnet ist, **dadurch gekennzeichnet, dass** dieser wenigstens eine zweite Kammerstruktur (60.2) aus einem Verbundmaterial aufweist, die sich in der Nähe der ersten Struktur (60.1) befindet und die neben der ersten Struktur (60.1) entlang der Wand (52) angeordnet ist.

2. Lufteinlass einer Gondel eines Luftfahrzeugs nach Anspruch 1, **dadurch gekennzeichnet, dass** die zweite Kammerstruktur (60.2) gegen die Innenseite der Wand (52) angesetzt ist, wobei das System (58) für die Enteisung zwischen der zweiten Kammerstruktur (60.2) und der Wand (52) angeordnet ist.

3. Lufteinlass einer Gondel eines Luftfahrzeugs nach Anspruch 1 oder 2, **dadurch gekennzeichnet, dass** dieser einen Schockabsorber in der Gestalt einer Haut (62) aufweist, die an das System (58) für die Enteisung mittels Joule-Effekt angedrückt ist.

4. Lufteinlass einer Gondel eines Luftfahrzeugs nach Anspruch 3, **dadurch gekennzeichnet, dass** die Haut (62) als Schicht auf der Grundlage von Fasern ausgestaltet ist.

5. Lufteinlass einer Gondel eines Luftfahrzeugs nach einem der vorhergehenden Ansprüche, **dadurch gekennzeichnet, dass** die erste Kammerstruktur (60.1) aus wärmeleitendem Material sich über eine Zone Z1 erstreckt, die wenigstens 2/3 der Entfernung entspricht, die die Innenwand (44) von der Außenwand (46) des Lufteinlasses trennt.

6. Lufteinlass einer Gondel eines Luftfahrzeugs nach einem der vorhergehenden Ansprüche, **dadurch gekennzeichnet, dass** dieser eine Kammerstruktur (60.1) einer ersten Art in einer Zone Z1 aufweist, die etwa 2/3 der Entfernung entspricht, die die Innenwand (44) von der Außenwand (46) des Lufteinlasses trennt und die im Wesentlichen auf mechanische Festigkeit ausgelegt ist, und dass dieser in wenigstens einer Zone Z2 in der Nähe der Zone Z1 wenigstens eine Kammerstruktur (60.2) von einer zweiten Art aufweist, die im Wesentlichen auf akustische Eigenschaften ausgelegt ist.

7. Lufteinlass einer Gondel eines Luftfahrzeugs nach Anspruch 6, **dadurch gekennzeichnet, dass** die Kammerstruktur (60.1) von der ersten Art in der Zone Z1 aus einem leitenden Material ist und dass die Kammerstruktur(en) (60.2) von der zweiten Art in der oder den Zone(n) Z2 aus Verbundmaterial ist (sind) und dass das System (58) für die Enteisung mittels Joule-Effekt in der Zone Z1 an die der Wand (52) entgegengesetzte Oberfläche der Kammerstruktur (60.1) der ersten Art angesetzt ist und in der oder den Zone(n) Z2, zwischen der Wand und der oder den Kammerstruktur(en) (60.2) der zweiten Art angeordnet, gegen die Innenseite der Wand 52 angesetzt ist.

8. Lufteinlass einer Gondel eines Luftfahrzeugs nach Anspruch 7, **dadurch gekennzeichnet, dass** die Ränder (66) der Kammerstruktur (60.1) der ersten Art und die in der Nähe gelegenen Kammerstrukturen (60.2) der zweiten Art zueinander komplementäre abgeschrägte Formen aufweisen.

9. Lufteinlass einer Gondel eines Luftfahrzeugs nach einem der vorhergehenden Ansprüche, **dadurch gekennzeichnet, dass** die freien Ränder der Kammerstruktur(en) abgeschrägt sind.

10. Gondel eines Luftfahrzeugs mit einem Lufteinlass nach einem der vorhergehenden Ansprüche, **dadurch gekennzeichnet, dass** diese einen hinteren Rahmen (48) im Bereich einer Verbindungsebene zwischen dem Lufteinlass und einer Motorisierung aufweist, die mit der Wand (52) verbunden ist, die den Wulst (42) begrenzt.

11. Gondel eines Luftfahrzeugs nach Anspruch 10, **dadurch gekennzeichnet, dass** der hintere Rahmen geneigt ist und dass sein äußerer Rand (72) in Bezug auf seinen inneren Rand (74) zum Vorderteil der Gondel hin versetzt ist.

## Claims

1. Air intake of an aircraft nacelle that comprises, on the one hand, a lip (42) that is defined by a wall (52) of which the surface that is in contact with the aerodynamic flows is extended on the inside of the nacelle by an inside wall (44) that borders a pipe that empties out at a power plant, and on the outside of the nacelle by an outside wall (46), and, on the other hand, a surface-type Joule-effect defrosting system (58), the air intake comprising at least a first alveolar structure (60.1) that is made of a material that conducts the heat that is flattened against the inside surface of the wall (52) and inserted between said wall (52) and the defrosting system (58), **characterized in that** it comprises at least a second alveolar structure (60.2) that is made of composite material that is adjacent to the first structure (60.1) and disposed adjacent said first structure (60.1) along the wall (52).

2. Air intake of an aircraft nacelle according to Claim 1, wherein the second alveolar structure (60.2) is flattened against the inside surface of the wall (52), the defrosting system (58) being inserted between the second alveolar structure (60.2) and said wall (52).

3. Air intake of an aircraft nacelle according to Claim 1 or 2, wherein it comprises a shock absorber in the form of a skin (62) that is glued against the Joule-effect defrosting system (58).

4. Air intake of an aircraft nacelle according to Claim 3, wherein the skin (62) comes in the form of a fiber-based layer.

5. Air intake of an aircraft nacelle according to any of the preceding claims,
wherein the first alveolar structure (60.1) that is made of a heat-conductive material extends over a zone Z1 that corresponds to at least 2/3 of the distance separating the inner wall (44) and the outside wall (46) of the air intake.

6. Air intake of an aircraft nacelle according to any of the preceding claims,
wherein it comprises an alveolar structure of a first type (60.1) in a zone Z1 that corresponds to approximately 2/3 of the distance separating the inner wall (44) and the outside wall (46) of the air intake that is sized essentially for the mechanical strength and at least one alveolar structure of a second type (60.2) in a or in at least one zone Z2 that is adjacent to the zone Z1 that is sized essentially for the acoustic characteristics.

7. Air intake of an aircraft nacelle according to Claim 6, wherein the alveolar structure of the first type (60.1) in the zone Z1 is made of a conductive material, and the alveolar structure(s) of the second type (60.2) in the zone(s) Z2 made of composite material, and wherein the Joule-effect defrosting system (58) is flattened against the surface of the alveolar structure of the first type (60.1) that is opposite to the wall (52) in the zone Z1 and flattened against the inside surface of the wall (52), inserted between said wall and the alveolar structure(s) of the second type (60.2) in the zone(s) Z2.

8. Air intake of an aircraft nacelle according to Claim 7, wherein the edges (66) of the alveolar structure of the first type (60.1) and adjacent alveolar structures of the second type (60.2) have complementary beveled shapes.

9. Air intake of an aircraft nacelle according to any of the preceding claims,
wherein the free edges of the alveolar structure(s) have a beveled shape.

10. Aircraft nacelle that incorporates an air intake according to any of the claims, wherein it comprises a rear frame (48) at the junction plane between said air intake and a power plant that is connected to the wall (52) that borders the lip (42).

11. Aircraft nacelle according to Claim 10, wherein the rear frame is tilted, and its outside edge (72) is offset toward the front of the nacelle relative to its inside edge (74).
